Europäisches Patentamt

European Patent Office

Office européen des brevets

(19)

(11) **EP 0 658 948 B1**

(12) **EUROPÄISCHE PATENTSCHRIFT**

(45) Veröffentlichungstag und Bekanntmachung des Hinweises auf die Patenterteilung:
 **16.04.1997 Patentblatt 1997/16**

(51) Int Cl.⁶: **H01M 4/62**, H01M 10/34

(21) Anmeldenummer: **94115951.9**

(22) Anmeldetag: **10.10.1994**

(54) **Elektrischer Nickel-Metallhydrid Akkumulator mit graphitenthaltender Nickelhydroxidelektrode**

Electrical nickel-metall hydride accumulator with electrode of nickelhydroxide comprising graphite

Accumulateur électrique au nickel-hydrure de métal avec électrode en hydroxyde de nickel comportant du graphite

(84) Benannte Vertragsstaaten:
 **BE DE FR GB NL PT**

(30) Priorität: **18.12.1993 DE 4343321**

(43) Veröffentlichungstag der Anmeldung:
 **21.06.1995 Patentblatt 1995/25**

(73) Patentinhaber: **VARTA Batterie Aktiengesellschaft**
 **30419 Hannover (DE)**

(72) Erfinder:
 • **Lichtenberg, Frank, Dr.**
  **D-67378 Zeiskam (DE)**
 • **Kleinsorgen, Klaus**
  **D-65779 Kelkheim (DE)**
 • **Hofmann, Günter**
  **D-65719 Hofheim (DE)**

(74) Vertreter: **Kaiser, Dieter Ralf, Dipl.-Ing.**
 **Gundelhardtstrasse 72**
 **65779 Kelkheim (DE)**

(56) Entgegenhaltungen:
 EP-A- 0 170 411   EP-A- 0 184 830
 EP-A- 0 634 804   DE-A- 2 738 386
 GB-A- 2 060 241

 • CHEMICAL ABSTRACTS, vol. 97, no. 20, 15.November 1982 Columbus, Ohio, US; abstract no. 171173r, NEGEEVICH V. M. ET AL 'Study of different types of graphite as a conductive additive for lamellar nickel oxide electrodes'
 • JOURNAL OF POWER SOURCES, Bd. 18, no.4, November 1986 LAUSANNE CH, Seiten 305-316, A VERES ET AL 'EXAMINATION OF THE GRAPHITE ADDITIVES TO ELECTRODES'
 • PATENT ABSTRACTS OF JAPAN vol. 5 no. 7 (E-041) ,17.Januar 1981 & JP-A-55 136468 (HITACHI MAXELL LTD) 24.Oktober 1980,
 • PATENT ABSTRACTS OF JAPAN vol. 4 no. 137 (E-27) [619] ,25.September 1980 & JP-A-55 088270 (NIPPON DENCHI K. K.) 3.Juli 1980,
 • PATENT ABSTRACTS OF JAPAN vol. 8 no. 95 (E-242) ,2.Mai 1984 & JP-A-59 014269 (MATSUSHITA DENKI SANGYO KK) 25.Januar 1984,

**Beschreibung**

Die Erfindung betrifft einen elektrischen Akkumulator mit einer positiven Nickelhydroxidelektrode, einer negativen Elektrode, die eine Wasserstoffspeicherlegierung umfaßt, einem zwischenliegenden Separator und einem alkalischen Elektrolyten.

Es ist bekannt, daß zahlreiche Metalle und Legierungen durch Bildung von Metallhydriden erhebliche Wasserstoffmengen absorbieren und speichern können. Diese Fähigkeit bildet die Grundlage für ein Energiespeichersystem, welches neben dem konventionellen Ni/Cd-Akkumulator oder dem sauren Bleiakkumulator in letzter Zeit großes Interesse gefunden hat, nämlich der Ni/Metallhydrid-Akkumulator.

Positive und negative Elektrode dieses Sekundärsystems sind in einem alkalischen Elektrolyten, wie auch sonst üblich, voneinander getrennt angeordnet. Dabei entspricht die positive Elektrode grundsätzlich der positiven Nickelhydroxidelektrode des Ni/Cd-Akkumulators.

Aus dem Dokument EP-A-0 184 830 sind Graphitzusätze zu der Nickelhydroxidelektrode von hauptsächlich Ni/Cd-Zellen bekannt. Dabei soll der Graphit durch Modifizierung mit einem Mischoxid vom Spinelltyp gegen den oxidativen Abbau geschützt werden, der insbesondere durch Sauerstoffentwicklung bei Überladungen eintritt.

Nach derzeitigem Standard, z.B. gemäß US-A-4935318, enthält die aktive Masse neben Nickelhydroxid als Hauptbestandteil ein Leitmittel in Form von Nickelmetallpulver, ferner Kobaltmetallpulver, gewisse Fremdhydroxide, insbesondere Kobalthydroxid, sowie ein Bindemittel. Die Bestandteile werden trocken gemischt, die Mischung darauf mit Wasser angeteigt und in eine hochporöse dreidimensionale Nickelmatrix eingestrichen.

Bei Anlegen eines elektrischen Stromes an die negative Elektrode einer Ni/MetallhydridSekundärzelle (Ni/MH) wird deren aktives Material, das zur Wasserstoffaufnahme befähigte Metall oder die Legierung M, durch die Absorption von Wasserstoff aufgeladen:

$$M + x\,H_2O + e^- \rightarrow MH_x + x\,OH^-$$

Bei der Entladung wird der gespeicherte Wasserstoff freigesetzt, so daß ein elektrischer Strom erzeugt wird:

$$MH_x + x\,OH^- \rightarrow M + x\,H_2O + e^-$$

Beide Reaktionen sind reversibel.

Entsprechendes gilt für die an der positiven Nickelhydroxid-Elektrode stattfindenden Reaktionen.

Aufladen:

$$Ni(OH)_2 + OH^- \rightarrow NiOOH + H_2O + e^-$$

Entladen:

$$NiOOH + H_2O + e^- \rightarrow Ni(OH)_2 + OH$$

Wegen des umweltfreundlichen Energieträgers Wasserstoff, der hier in Verbindung mit der bewährten, prinzipiell gleichen positiven Elektrode des Ni/Cd-Akkumulators eingesetzt wird, bieten Ni/Metallhydrid-Batterien bereits heute gegenüber konventionellen Sekundärbatterien deutliche Vorteile.

Ni/Metallhydrid-Batterien sind gasdicht, wartungsfrei und erreichen dank einer weit vorangeschrittenen Technik für die Elektrodenherstellung bereits Energiedichten von 50Wh/kg. Dabei spielt die Qualität der positiven Elektrode, da sie kapazitätsbegrenzend ist, eine besonders wichtige Rolle.

Vor der Einführung von schnelladbaren Ni/Cd-Knopfzellen wurde in Nickelhydroxidelektroden anstelle des heute üblichen Nickelpulvers Graphit als Leitmittel verwendet. Für die positive, hauptsächlich jedoch aus Quecksilber(II)-oxid bestehende Elektrode einer Metalloxid/Wasserstoff-Experimentierzelle wurde in der DE-PS 1771420 ebenfalls ein Graphitzusatz zur Leitfähigkeitsverbesserung vorgeschlagen.

Die erst später neben Nickelmetallpulver als Leitmaterial üblich gewordenen Zusätze von Kobalt und Kobaltoxiden begünstigen aufgrund ihrer Leitfähigkeit die Masseausnutzung der Nickelhydroxidelektrode. Sie dienen außerdem der Einstellung einer Entladereserve auf der negativen Elektrode, indem sich bei der ersten Ladung der Zelle vor der Oxidation des $Ni(OH)_2$ stabile leiffähige Kobaltoxide (CoOOH) bilden, deren Oxidationspotential niedriger liegt als dasjenige von NiOOH. Sie nehmen deshalb an dem späteren Reaktionsgeschehen in der Zelle nicht mehr teil, wenn die Entladeschlußspannung 1V nicht wesentlich unterschritten wird, und die zu ihrer Bildung einmal aufgewendete Ladestrommenge bleibt der negativen Elektrode als Kapazitätsüberschuß (Entladereserve) gegenüber der positiven Elektrode dann erhalten. Bei außergewöhnlichen Betriebsbedingungen (z.B. Umpolung, Tiefentladung) kann das Leitgerüst jedoch reduzierend zerstört werden.

Die meisten marktgängigen Ni/Metallhydrid-Akkumulatoren, ob Rundzellen, prismatische Zellen oder solche vom Knopfzellentyp, bereiten nun ein ernstes Problem dadurch, daß sie einem Hochtemperatur-Lagerungstest (HTSC, High Temperature Short Circuit), der von den Batteriekunden aus der Industrie vorgenommen wird, in der Regel nicht standhalten. Bei diesem Test werden die Zellen im entladenen Zustand mit einem Lastwiderstand von $2\Omega$ versehen und 3 Tage lang bei 65°C gelagert. Anschließend erfolgt durch einige Lade/Entladezyklen bei Raumtemperatur eine Kapazitätsprüfung. Der Test simuliert das langfristige Kurzschlußverhalten in elektronischen Geräten, wobei die hohe Temperatur die Testdauer verkürzt. Dabei werden massive irreversible Kapazitätseinbußen gefunden, die auf der reduktiven Zerstörung des CoOOH-Leitgerüstes durch die Aufprägung des negativen Potentials der Metallhydridelektrode auf die positve Elektrode während des Kurzschlusses beruhen.

Der Erfindung liegt die Aufgabe zugrunde, einen alkalischen Ni/Metallhydrid-Akkumulator verfügbar zu machen, der sich dem HTSC-Test gewachsen zeigt.

Die Aufgabe wird erfindungsgemäß durch einen Akkumulator gelöst, wie er in Patentanspruch 1 definiert ist.

Es wurde gefunden, daß für das Versagen des Akkumulators bisher offenbar die positive Elektrode verantwortlich war, daß diese jedoch stabilisiert werden kann, wenn sie aus einer Massemischung von Nickelhydroxidpulver und einem oxidationsbeständigen Graphit als Leitmittel hergestellt ist. Damit fungiert nicht mehr das reduktionsanfällige CoOOH-Leitgerüst als Hauptleitgerüst, sondern der inerte Graphit.

Zwar ist der Zusatz von Graphit auf dem Gebiete der Ni/Cd-Zellen, wie weiter vorn bereits erwähnt, seit langem bekannt. Die bisher verfügbaren Graphit-Qualitäten waren aber nur bedingt brauchbar, weil sie in alkalischen Zellen einer Oxidation gemäß

$$C + O_2 + 2\,KOH \rightarrow K_2CO_3 + H_2O$$

unterliegen. Je weniger oxidationsbeständig der Graphit ist, desto mehr $K_2CO_3$ wird im Laufe der Zeit gebildet. Bei Ni/Cd-Zellen macht sich diese Reaktion durch Bildung eines stufenförmigen Spannungsabfalls bemerkbar. Als Ursache kommt der Wechsel der potentialbildenden Reaktion von Cd/Cd(OH)$_2$ nach Cd/CdCO$_3$ in Betracht. Zusätzlich wird mit zunehmender Bildung von $K_2CO_3$ die Elektrolytleitfähigkeit schlechter. Aus diesen beiden Gründen hat sich bei Ni/Cd-Knopfzellen der Einsatz von Ni-Pulver als Leitmaterial anstelle von Graphit durchgesetzt.

Im Gegensatz zu Ni/Cd-Zellen sind Ni/Metallhydrid-Zellen von dem besagten Spannungsabfall nicht betroffen, da die Bildung von $K_2CO_3$ nicht in die negative Elektrodenreaktion $M + xH \leftrightarrow MH_x$ (M = wasserstoffspeichernde Legierung) eingeht. Lediglich die Ionenleitfähigkeit des Elektrolyten wird mit zunehmender Bildung von $K_2CO_3$ beeinträchtigt.

Mit dem erfindungsgemäßen Einsatz eines oxidationsbeständigen Graphits konnte jedoch auch dieser Mangel abgestellt werden, so daß er zum vorteilhaften alternativen Leitmaterial für die positive Elektrodenmassen in Ni/Metallhydrid-Akkumulatoren wird.

Die besondere chemische Resistenz dieses Graphits gründet sich vorwiegend auf seinen hohen Kristallinitätsgrad. Erfindungsgemäß weist er Kristallitgrößen von mindestens 180nm, vorzugsweise von mindestens 200nm auf.

Die Kristallitgröße $L_c$, auch Stockhöhe genannt, wird mittels Pulverröntgenbeugung auf der Grundlage der Scherrer-Gleichung $D = K \times \lambda / \beta \times \cos\vartheta$ bestimmt. Darin bedeuten D (=$L_c$) die Kantenlänge des Kristallits in dessen Hauptrichtung (bei Graphit die c-Achse), K eine Konstante vom Betrag $\approx 1$, $\beta$ die von experimentellen Einflüssen bereinigte Halbwertsbreite eines ausgewählten Reflexes, wobei für den Graphit die Reflexe 002 und 004 als Berechnungsgrundlage dienen.

Ein weiteres Kriterium des oxidationsbeständigen Graphits ist sein Aschegehalt. Dieser sollte kleiner sein als 0,5%, vorzugsweise kleiner als 0,3%. Die BET-Oberfläche des Materials sollte kleiner sein als 6 m$^2$/g. Oxidationsbeständige Graphite in der für den erfindungsgemäßen Einsatz erforderlichen Qualität sind neuerdings auch handelsüblich, z.B. die Type Lonza SFG 75.

Das Gewichtsverhältnis der Bestandteile der neuen positiven Masse gemäß Erfindung sollte bei 75 bis 90% Ni(OH)$_2$, vorzugsweise ca. 85%, und bei 1 bis 25% Graphit, vorzugsweise ca. 15%, liegen. Grundsätzlich sind auch höhere Graphitanteile bis zu 35 Gew% möglich.

Die günstige Auswirkung der erfindungsgemäßen Maßnahme konnte durch einen Versuch belegtwerden. Dazu wurden für zwei Testreihen wegen ihrer leichten Montierbarkeit Knopfzellen ausgewählt.

Die positiven Elektroden der aus 6 Zellen bestehenden einen Testreihe wurden aus einer erfindungsgemäßen Mischung von 85 Gew.% Ni(OH)$_2$ und 15 Gew.% oxidationsbeständigem Graphit hergestellt. Daneben war eine zweite Testreihe von 6 Zellen beteiligt, deren positive Elektroden eine am Stand der Technik orientierte Massemischung aus 66 Gew.% Ni(OH)$_2$, 30 Gew.% Ni, 3 Gew.% CoO und 1 Gew.% Co aufwiesen (Standardzellen).

Als negative Elektroden dienten in allen Fällen Preßpulvertabletten aus einer Wasserstoffspeicherlegierung.

Alle positiven Elektroden wurden vor der Zellenmontage über Nacht bei 80°C in Co-haltiger KOH-Lauge gelagert. Nach der Zellenmontage wurden die Zellen wie gewöhnlich in Betrieb genommen, wobei der Lade-/Entladestrom 50mA betrug und die Entladeschlußspannung bei 0,7V festgesetzt war, nach dem 6.Zyklus jedoch dem HTSC-Test unterworfen. Danach wurde die anfängliche Zyklenbehandlung über weitere 5 Zyklen fortgesetzt, um die Auswirkung des Hochtemperatur-Lagertests auf das Kapazitätsverhalten zu ermitteln.

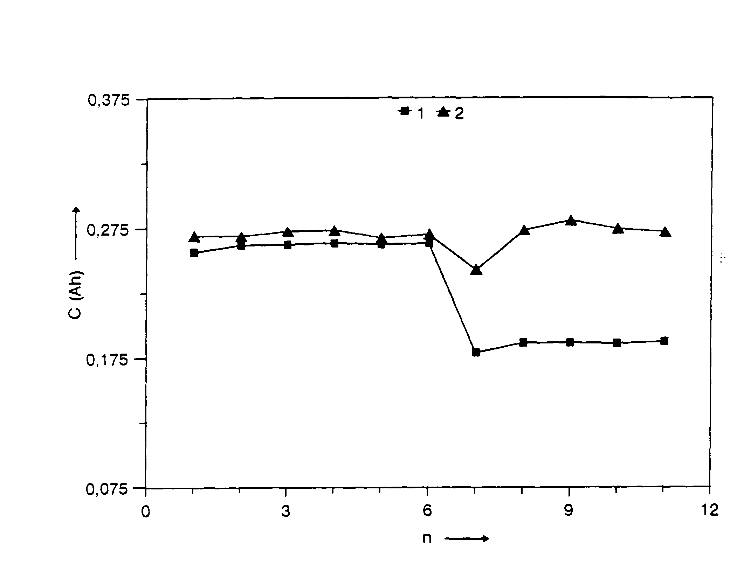

Die Figur zeigt in einer vergleichenden Kurvendarstellung die Kapazitätsentwicklung (C[Ah] in Abhängigkeit von der Zyklenzahl n) von erfindungsgemäßen Ni/Hydrid-Zellen und von Standardzellen unter dem Einfluß des HTSC-Tests. Beide Kurven sind jeweils aus den Meßdaten der einen und der anderen Gruppe gemittelt.

Wie ersichtlich, hat der HTSC-Test für die Standardzellen (Kurve 1) einen gravierenden Kapazitätsrückgang zur Folge, von dem sie sich im weiteren Verlauf der Zyklenbehandlung nicht mehr erholen.

Hingegen fällt ein Kapazitätseinbruch bei den erfindungsgemäßen "Graphitzellen" (Kurve 2) nicht nur geringfügiger aus, sondern es findet innerhalb von 2 bis 3 Folgezyklen auch eine Erholung statt, bei der die ursprüngliche Kapazität wieder erreicht wird. Das Versuchsergebnis bestätigt, daß der Kapazitätsverlust durch die positive Elektrode bedingt ist. Eine Erklärung dafür könnte die sein, daß in den kobalthaltigen positiven Elektroden konventioneller Zellen durch die erste Ladung ein stabiles Leitgerüst aus β-CoOOH aufgebaut wird, welches die schlecht leitenden Nickelhydroxidpartikel netzartig umgibt. Unter den Bedingungen des HTSC-Tests jedoch kann sich das Potential der positiven Elektrode so stark zu negativen Werten hin verschieben, daß die β-CoOOH-Netzstruktur zu β-Co(OH)$_2$ reduziert und somit zerstört wird. Mangels eigener Leitfähigkeit ist dann das ursprüngliche Leitgerüst nicht mehr in der Lage, ebenfalls auf die Oxidationsstufe des Ni$^{2+}$ entladenes Nickelhydroxid, das ohnehin nichtleitend und wegen seines wasserarmen Kristallhabitus inaktiv ist, von neuem zu aktivieren.

Eine stabile Elektrodenmatrix, welche dies aber offensichtlich leistet und sich insofern ähnlich wie ein stabiler Sinterkörper verhält, liegt mithin in dem neuen Graphitmaterial mit den angegebenen Kenndaten vor.

Aus der Figur ist auch ersichtlich, daß die erfindungsgemäßen "Graphit-Zellen", obwohl Kobalt kein essentieller Bestandteil ihrer positven Elektrodenmasse ist, den konventionellen "Kobalt-Zellen" im normalen Kapazitätsverhalten mindestens ebenbürtig sind.

**Patentansprüche**

1.  Elektrischer Akkumulator mit einer positiven Nickelhydroxidelektrode, einer negativen Elektrode, die eine Wasserstoffspeicherlegierung umfaßt, einem zwischenliegenden Separator und einem alkalischen Elektrolyten, dadurch gekennzeichnet, daß der Nickelhydroxidmasse der positiven Elektrode als Leitmittel ein oxidationsbeständiger Graphit mit einem hohen Kristallinitätsgrad zugemischt, dessen Kristallitgröße (Stockhöhe) L$_c$ mindestens 180nm beträgt und dessen Aschegehalt kleiner als 0,5% ist.

2.  Elektrischer Akkumulator nach Anspruch 1, dadurch gekennzeichnet, daß die Kristallitgröße (Stockhöhe) L$_c$ mindestens 200nm beträgt und der Aschegehalt kleiner als 0,3 % ist.

3.  Elektrischer Akkumulator nach Anspruch 1 oder 2, dadurch gekennzeichnet, daß ein Graphit zugemischt ist, dessen BET-Oberfläche kleiner als 6 m$^2$/g ist.

4.  Elektrischer Akkumulator nach einem der Ansprüche 1 bis 3, dadurch gekennzeichnet, daß der Gewichtsanteil des Graphits an der Massemischung der positiven Elektrode zwischen 1 und 25% beträgt.

5.  Elektrischer Akkumulator nach einem der Ansprüche 1 bis 4, dadurch gekennzeichnet, daß der Gewichtsanteil des Graphits an der Massemischung der positiven Elektrode ca. 15% beträgt.

6.  Elektrischer Akkumulator nach einem der Ansprüche 1 bis 5, dadurch gekennzeichnet, daß die Zellenbestandteile in einem Knopfzellengehäuse angeordnet sind.

**Claims**

1.  Electrical accumulator with a positive nickel hydroxide electrode, a negative electrode which comprises a hydrogen reservoir alloy, a separator in between and an alkaline electrolyte, characterized in that an oxidation-resistant graphite having a high degree of crystallinity, the crystallite size (storey height) L$_c$ of which is at least 180 nm and the ash content of which is less than 0.5%, is added to the nickel hydroxide substance of the positive electrode as a conducting agent.

2.  Electrical accumulator according to claim 1, characterized in that the crystallite size (storey height) L$_c$ is at least 200 nm and the ash content is less than 0.3%.

3.  Electrical accumulator according to claim 1 or 2, characterized in that a graphite of which the BET surface area is less than 6 m$^2$/g is admixed.

4.  Electrical accumulator according to one of claims 1 to 3, characterized in that the weight content of the graphite in the substance mixture of the positive electrode is between 1 and 25%.

5.  Electrical accumulator according to one of claims 1 to 4, characterized in that the weight content of the graphite in the substance mixture of the positive electrode is approx. 15%.

6.  Electrical accumulator according to one of claims 1 to 5, characterized in that the cell constituents are arranged in a round cell housing.

**Revendications**

1.  Accumulateur électrique ayant une électrode positive d'hydroxyde de nickel, une électrode négative, qui comporte un alliage à stockage d'hydrogène, un séparateur intermédiaire et un électrolyte alcalin,

caractérisé en ce que
à la masse d'hydroxyde de nickel de l'électrode positive est mélangé comme agent conducteur un graphite résistant à l'oxydation ayant un degré de cristallinité élevé, dont la grandeur de la cristallite (hauteur de souche) $L_c$ atteint au moins 180 nm et dont la teneur en cendres est inférieure à 0,5 %.

2. Accumulateur électrique selon la revendication 1, caractérisé en ce que
la grandeur de la cristallite (hauteur de souche) $L_c$ atteint au moins 200 nm et la teneur en cendres est inférieure à 0,3 %.

3. Accumulateur électrique selon les revendications 1 ou 2,
caractérisé en ce que
un graphite est ajouté au mélange, dont la surface BET est inférieure à 6 $m^2$/g.

4. Accumulateur électrique selon une des revendications 1 à 3,
caractérisé en ce que
la proportion pondérale du graphite sur le mélange en masse de l'électrode positive se monte entre 1 et 25 %.

5. Accumulateur électrique selon une des revendications 1 à 4,
caractérisé en ce que
la proportion pondérale du graphite sur le mélange en masse de l'électrode positive se monte à 15 %.

6. Accumulateur électrique selon une des revendications 1 à 5,
caractérisé en ce que
les composants des piles sont disposés dans un boîtier de pile bouton.